# EUROPÄISCHE PATENTSCHRIFT

(11) **EP 2 262 670 B1**
(45) Veröffentlichungstag und Bekanntmachung des Hinweises auf die Patenterteilung: **23.11.2011**
(21) Anmeldenummer: 09728442.6
(22) Anmeldetag: 31.03.2009
(51) Int. Cl.: B60R 25/02, B60R 25/00

(54) **VORRICHTUNG ZUR ANSTEUERUNG EINER SPERREINHEIT**
DEVICE FOR TURNING ON A BLOCKING UNIT
DISPOSITIF D'ACTIONNEMENT D'UNE UNITÉ DE BLOCAGE

(30) Priorität: 01.04.2008 DE 102008016820
(43) Veröffentlichungstag der Anmeldung: 22.12.2010
(73) Patentinhaber: Huf Hülsbeck & Fürst GmbH & Co. KG, 42551 Velbert (DE)
(72) Erfinder: TRISCHBERGER, Werner, 85229 Langenpettenbach (DE)
(74) Vertreter: Vogel, Andreas
(86) Internationale Anmeldenummer: PCT/EP2009/053836
(87) Internationale Veröffentlichungsnummer: WO 2009/121895

(56) Entgegenhaltungen:
- DE-B3- 10 247 802
- DE-B3- 10 247 803
- DE-C1- 10 030 688

## Beschreibung

Die Erfindung betrifft eine Vorrichtung zur Ansteuerung einer linear verschiebbaren Sperreinheit eines funktionswesentlichen Bauteils, insbesondere einer. Lenksäule oder eines Gangschalthebels eines Kraftfahrzeuges, mit einem mittels eines Antriebes um eine Drehachse hin- und herdrehbaren Steuerglieds, das innenseitig eine Steuerfläche aufweist, wobei entlang dieser Steuerfläche die Sperreinheit in eine Verriegelungsstellung und in eine Entriegelungsstellung führbar ist, wobei in der Verriegelungsstellung die Sperreinheit in das funktionswesentliche Bauteil eingreift und in der Entriegelungsstellung die Sperreinheit losgelöst vom funktionswesentlichen Bauteil ist.

In der DE 101 21 714 C1 ist eine Vorrichtung zur Ansteuerung eines Sperrgliedes beschrieben, das in eine. Verriegelungsstellung und in eine Entriegelungsstellung bringbar ist. Das Sperrglied wird hierbei durch ein sich drehendes Steuerglied axial verschoben. Das Sperrglied ist mit einem Querstift in Wirkverbindung, der innenseitig des Steuergliedes in Steuerflächen eingreift. Es hat sich gezeigt, dass in gewissen Situationen hohe Auszugskräfte auf das Sperrglied einwirken können, die etwaige Materialschädigungen an der Steuerfläche entstehen lassen können. Diese Schädigungen werden u.a. dadurch verstärkt, dass der Querstift nur punktuell an der Steuerfläche entlang fährt und somit während der Bewegung des Sperrgliedes hohe Kräfte auf die Steuerfläche wirken lässt.

Das Dokument DE-10247802 offenbart eine Vorrichtung gemäß dem Oberbegriff des Anspruchs 1.

Es ist Aufgabe der vorliegenden Erfindung, eine Vorrichtung der genannten Art zu schaffen, bei der die oben erwähnten Nachteile vermieden werden, insbesondere eine Vorrichtung bereit gestellt wird, die weniger verschleißanfällig ist und gleichzeitig eine zuverlässige Funktionsweise zum Verriegeln und Entriegeln des funktionswesentlichen Bauteils sicherstellt.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Erfindungsgemäß ist vorgesehen, dass ein vorsprungartiges, umfangseitig starr an der Sperreinheit angeordnetes Flügelelement vorgesehen ist, das während der Bewegung des Steuergliedes flächig die Steuerfläche kontaktiert. Während das Steuerglied um die Drehachse rotierend sich bewegt, kontaktiert das Flügelelement flächig die Steuerfläche des Steuergliedes, wobei eine gleichmäßige Kraftübertragung vom Steuerglied aus auf das Flügelelement bewirkt wird. Hierdurch erfolgt eine Bewegung der Sperreinheit von der Verriegelungsstellung in die Entriegelungsstellung oder umgekehrt, ohne dass zu befürchten ist, dass aufgrund der auf das Steuerglied wirkenden Kräfte die Innen liegende Steuerfläche beschädigt wird. Vorzugsweise bildet die Sperreinheit und das Flügelelement ein gemeinsames, materialeinheitliches Bauteil. In einer möglichen Ausführungsform der Erfindung kann das Flügelelement an der Sperreinheit angespritzt sein, insbesondere durch ein 2-K-Spritzgussverfahren. Die Steuerfläche dient als eine Art Führungsbahn, auf der das Flügelelement während der Bewegung des Steuergliedes entlang fährt. Die Steuerfläche kann innenseitig des Steuergliedes als eine schraubenlinienförmig verlaufende Nut ausgeführt sein, die sich um die Drehachse des Steuergliedes erstreckt.

Vorzugsweise sind zumindest zwei Steuerflächen und zwei Flügelelemente vorgesehen, wobei ein erstes Flügelelement einer ersten Steuerfläche und ein zweites Flügelelement einer zweiten Steuerfläche zugeordnet ist. Bei dieser Ausführungsalternative verlaufen die Steuerflächen zueinander unabhängig innenseitig des Steuergliedes, sodass man hier von einem zweigängigen Steuerflächenverlauf sprechen kann. Hierbei ist jedem Flügelelement eine Steuerfläche genau zugeordnet.

Durch eine Anordnung von zwei Flügelelementen, die mit Ihren "Tragflächen" während der Bewegung der Sperreinheit die Steuerflächen kontaktieren, wird eine große Fläche zur Verfügung gestellt, über die eine gleichmäßige Übertragung der Kraft auf die Sperreinheit bewirkt werden kann. Das bedeutet gleichzeitig, dass bewusst hohe Auszugskräfte auf die Sperreinheit während ihrer Bewegung aus der Verriegelungsstellung in die Entriegelungsstellung einbringbar sind.

Vorteilhaft ist, dass die Steuerfläche gewindeartig zur Drehachse des Steuergliedes verläuft, wobei die Steuerfläche mindestens eine Schrägfläche mit einer definierten Steigung und mindestens zwei ebenen Flächen aufweist, die in einer zur Drehachse des Steuergliedes senkrechten Ebene liegen. Während sich das Flügelelement in oder an der ebenen Fläche der Steuerfläche befindet und das Steuerglied angetrieben wird, erfolgt keine Bewegung der Sperreinheit. Das bedeutet, das hierdurch gezielt ein Freilauf des Antriebs bewirkt wird, bei dem trotz eines angetriebenen Steuergliedes die Sperreinheit in ihrer jeweiligen Stellung verbleibt. Befindet sich hingegen das Flügelelement in der Schrägfläche der Steuerfläche, erfolgt eine Bewegung der Sperreinheit von der Verriegelungsstellung in die Entriegelungsstellung oder umgekehrt.

In einer bevorzugten Ausführungsform der Erfindung weist die Sperreinheit ein Sperrgehäuse und ein innerhalb des Sperrgehäuses federbelastetes, linear beweglich gelagertes Sperrglied auf. Somit greift in der Verriegelungsstellung der Sperreinheit das Sperrglied unmittelbar am funktionswesentlichen Bauteil ein, welches durch die Stellung des Sperrgliedes blockiert ist. Es hat sich gezeigt, dass Situationen auftreten können, bei denen während des Verriegelungsvorganges, d. h. von der Überführung der Sperreinheit aus ihrer Entriegelungsstellung in die Verriegelungsstellung, das funktionswesentliche Bauteil sich in einer gewissen Fehlstellung befinden kann, in der die Sperreinheit, insbesondere das Sperrglied nicht funktionsgerecht das funktionswesentliche Bauteil blockieren kann.

Ist zum Beispiel das funktionswesentliche Bauteil eine Lenksäule eines Kraftfahrzeuges und die Sperreinheit kann während des Verriegelungsvorganges nicht ihre tatsächliche Verriegelungsstellung erreichen, da beispielsweise die Lenksäule sich in einer Fehlstellung befindet, bei der das Sperrglied auf einen Zahn der Lenksäule trifft anstelle in die entsprechende Aufnahmeöffnung, bei der eine zuverlässige Blockierung der Lenksäule erzielt werden könnte, verbleibt das Sperrglied in einer gewissen Zwischenstellung. Das Sperrglied ist innerhalb der Sperreinheit linear beweglich gelagert. In einer Fehlstellung des funktionswesentlichen Bauteils wird zwar die Sperreinheit über das Steuerglied axial entlang der Drehachse bewegt. Inwieweit eine Fehlstellung des funktionswesentlichen Bauteils vorliegt oder nicht ist für den Verschiebeweg des Sperrgehäuses nahezu unerheblich. Das federbelastete Sperrglied erreicht jedoch bei einer Fehlstellung des funktionswesentlichen Bauteils nicht seine eigentliche Verriegelungsstellung. Das bedeutet, dass das Sperrglied mit einem größeren Teil innerhalb des Sperrgehäuses verbleibt, wobei es an seinem freien Ende das sich in einer Fehlstellung befindende Bauteil kontaktiert. Die Sperreinheit mit Sperrgehäuse und federbelastetem Sperrglied bilden eine Sicherheitseinheit, die es trotz einer Fehlstellung des funktionswesentlichen Bauteils ermöglicht, dass das Sperrglied kontrolliert aus dem Sperrgehäuse entsprechend gedrückt wird, ohne etwaige Materialzerstörungen entstehen zu lassen.

Liegt das freie Ende des Sperrgliedes bereits auf einem Bereich des sich in einer Fehlstellung befindenden Bauteils an, ohne dass die eigentliche Verriegelungsstellung der Sperreinheit erreicht ist, bewegt sich das Sperrgehäuse - angetrieben durch das rotierende Steuerglied - weiter. Die innerhalb des Sperrgehäuses sich befindende Feder wird hierdurch weiter gespannt und wirkt mit einer erhöhten Kraft auf das Sperrglied. Wird beispielsweise die Fehlstellung des funktionswesentlichen Bauteils beseitigt, drückt die Feder das Sperrglied in die Verriegelungsstellung, in der es das funktionswesentliche Bauteil blockiert.

Um möglichst große Kräfte auf das Sperrglied während der Bewegung in seine jeweilige Stellung wirken zu lassen, erstreckt sich das Flügelelement in einem Bereich zwischen 60° ≤ x ≤ 180°, vorzugsweise in einem Bereich zwischen 90° ≤ x ≤ 150° entlang der Mantelfläche des Sperrgehäuses. In einer möglichen Alternative weist die Steuerfläche vier ebene Flächen mit einer oberen Endfläche, einer oberen Zwischenfläche, einer unteren Zwischenfläche und einer unteren Endfläche auf. Die vier ebenen Flächen liegen in einer zur Drehachse des Steuergliedes senkrechten Ebene. Gleichzeitig weist die Steuerfläche drei Schrägflächen mit einer oberen Schrägfläche, einer Hauptschrägfläche und einer unteren Schrägfläche auf. Vorzugsweise liegt die untere Schrägfläche zwischen der unteren Endfläche und der unteren Zwischenfläche. Die Hauptschrägfläche hingegen liegt zwischen der unteren Zwischenfläche und der oberen Zwischenfläche und die obere Schrägfläche ist zwischen der oberen Endfläche und der oberen Zwischenfläche positioniert. Somit kann vorteilhafterweise erreicht werden, dass die Verriegelungsstellung eine erste und eine zweite Verriegelungsstellung und die Entriegelungsstellung eine erste und eine zweite Entriegelungsstellung umfassen kann. Hierdurch kann ein Freilauf des Antriebes sowohl in der Verriegelungsstellung als auch in der Entriegelungsstellung erzielt werden. Der Antrieb kann derart ausgeführt sein, dass der Freilauf auch als unendlicher Freilauf wirken kann, dass bedeutet, dass der Antrieb, insbesondere das Steuerglied ohne abgeschaltet zu werden oder die Drehrichtung zu ändern, auf die Sperreinheit wirken kann, die wiederum stets in der Verriegelungsstellung oder in der Entriegelungsstellung verbleibt. Somit können auch Motoren für-die Ansteuerung des Steuergliedes zum Einsatz kommen, die lediglich mit einer sehr einfachen Motorsteuerung arbeiten. Obwohl die Sperreinheit ihre Verriegelungsstellung oder Entriegelungsstellung längst erreicht hat, kann der Motor ohne Probleme noch etwas nachlaufen. Dies gilt entsprechend für einen Vorlauf.

In der bevorzugten Ausführungsform der Erfindung führt während des Freilaufes die Sperreinheit eine entlang der Drehachse abwechselnde Hin- und Herbewegung in linearer Richtung aus, ohne die jeweilige Verriegelungsstellung oder die Entriegelungsstellung zu verlassen. Die Steuerfläche kann hierbei derart ausgebildet sein, dass in der ersten Verriegelungsstellung der Sperreinheit das Flügelelement die untere Endfläche kontaktiert, in der zweiten Verriegelungsstellung der Sperreinheit das Flügelelement die untere Zwischenfläche kontaktiert, in der ersten Entriegelungsstellung der Sperreinheit das Flügelelement die obere Endfläche kontaktiert und in der zweiten Entriegelungsstellung der Sperreinheit das Flügelelement die obere Zwischenfläche kontaktiert.

Liegt beispielsweise ein Freilauf in der Verriegelungsstellung vor, kontaktiert das Flügelelement zunächst die untere Zwischenfläche der Steuerfläche. Da das Steuerglied im Freilauf noch weiter um die Drehachse sich bewegt, verlässt das Flügelelement nach einem bestimmten Drehwinkel des Steuerglieds die untere Zwischenfläche und kommt in Eingriff mit der unteren Schrägfläche, auf der das Flügelelement bis zur unteren Endfläche kontaktierend entlang fährt. Hierdurch verlässt die Sperreinheit die zweite Verriegelungsstellung und gelangt in die erste Verriegelungsstellung. Erfolgt eine weitere Bewegung des Steuergliedes in gleicher Richtung, verlässt schließlich das Flügelelement die untere Endfläche der Steuerfläche und gelangt in die zweite Verriegelungsstellung, bei der es erneut die untere Zwischenfläche kontaktiert. Analog dazu kann eine abwechselnde Hin- und Herbewegung in der Entriegelungsstellung der Sperreinheit erfolgen, wobei die Sperreinheit von ihrer ersten Entriegelungsstellung in die zweite Entriegelungsstellung abwechselnd sich hin- und herbewegt.

Zweckmäßigerweise wird der Antrieb beispielsweise über eine Steuerelektronik dann deaktiviert, falls die Sperreinheit, insbesondere das Sperrglied seine jeweilige Stellung erreicht hat. Um dieses festzustellen, kann eine Kontrolleinheit vorgesehen sein, die die jeweilige Stellung der Sperreinheit ermittelt. Hierbei kann die Kontrolleinheit ein Sensorelement aufweisen, das insbesondere über eine definierte Änderung seiner elektrischen Eigenschaft, insbesondere der Induktivität, des Widerstandes oder der Kapazität ein Sensorsignal erzeugt, aus dem die jeweilige Stellung der Sperreinheit feststellbar ist. Hierbei kann das Sensorelement als ein Magnetfeldsensor, ein Drucksensor oder ein optischer Sensor ausgeführt sein. Es ist denkbar, dass das Sensorelement an der Steuerfläche, dem Flügelelement oder an einem feststehenden Bauteil, das benachbart zur Sperreinheit positioniert ist, angeordnet ist. In einer weiteren Alternative der Erfindung kann es von Vorteil sein, das Sensorelement an der oberen und/oder an der unteren Zwischenfläche der Steuerfläche anzuordnen. Hat die Kontrolleinheit eine Verriegelungsstellung oder Entriegelungsstellung detektiert, wird der Antriebsmechanismus deaktiviert, sodass das Steuerglied zum Stehen kommt. Über eine erneute Aktivierung des Antriebes und einer Drehrichtungsumkehr des Steuergliedes kann die Sperreinheit in die entgegengesetzte Stellung wieder bewegt werden.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1: die erfindungsgemäße Vorrichtung, bei der die Sperreinheit sich in einer Entriegelungsstellung befindet,
- Fig. 2: eine weitere Schnittansicht gemäß Fig. 1,
- Fig. 3: die Vorrichtung gemäß Fig. 1, wobei sich die Sperreinheit in der Verriegelungsstellung befindet,
- Fig. 4: eine weitere Schnittansicht gemäß Fig. 3,
- Fig. 5: die Vorrichtung gemäß Fig. 1, wobei das funktionswesentiiche Bauteil sich in einer Fehlstellung befindet,
- Fig. 6: eine weitere Schnittansicht gemäß Fig. 5,

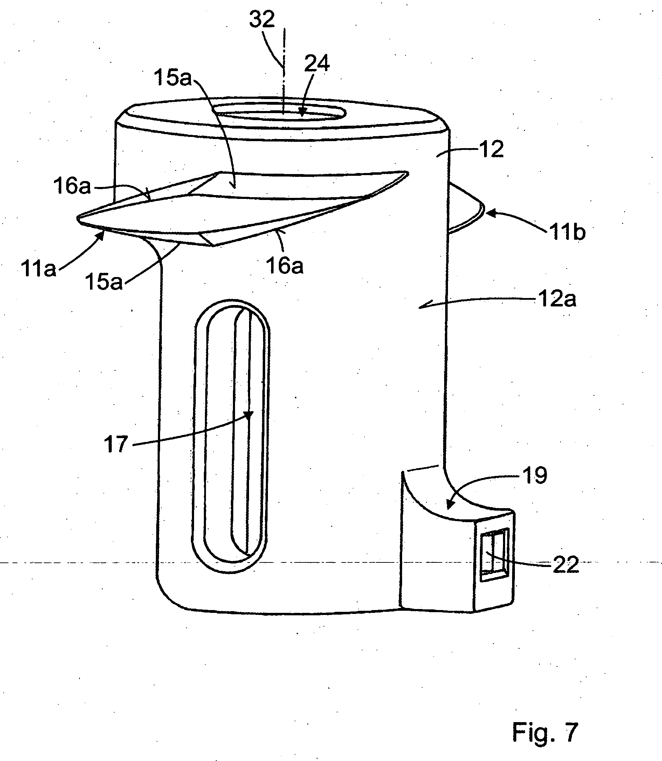

- Fig. 7: eine Darstellung eines Bauteiles der Sperreinheit, insbesondere des Sperrgehäuses,
- Fig. 8: eine Schnittansicht des Steuergliedes und
- Fig. 9: eine schematische Darstellung der Abwicklung der Steuerfläche des Steuergliedes.

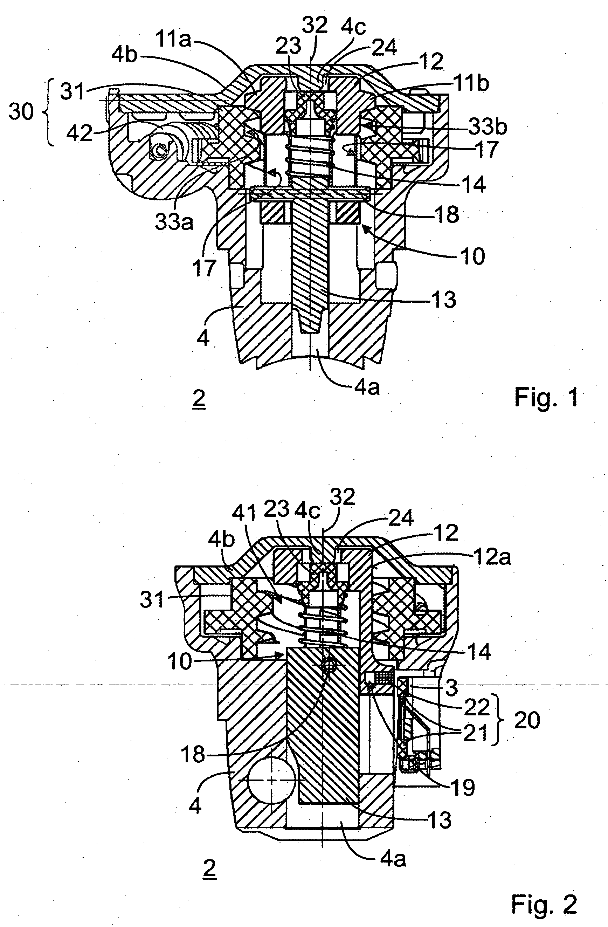

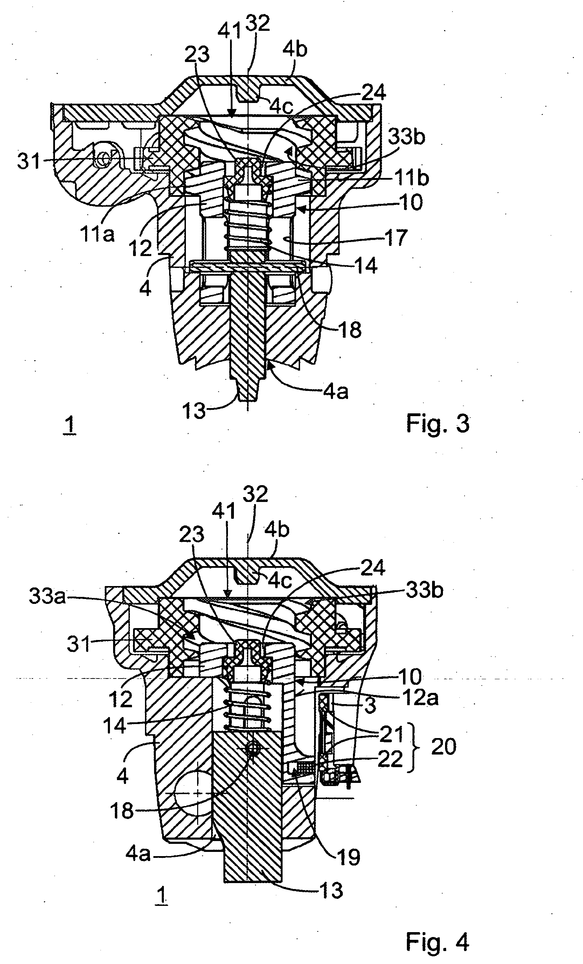

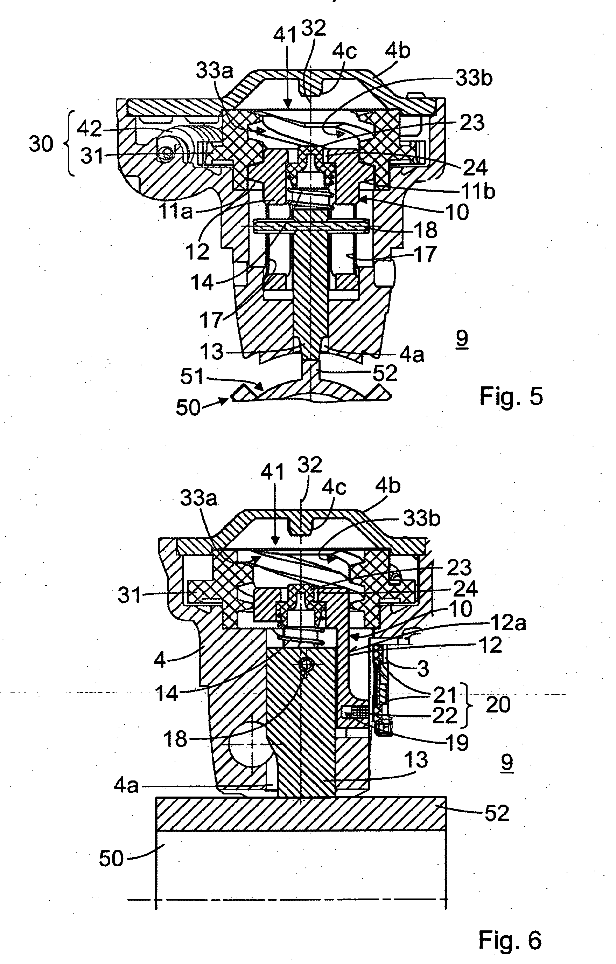

Die folgende Figurenbeschreibung zeigt eine mögliche Ausführungsform einer Vorrichtung zur Ansteuerung einer linear verschiebbaren Sperreinheit 10 eines funktionswesentlichen Bauteils 50, das im vorliegenden Fall eine Lenksäule 50 eines Kraftfahrzeuges ist. Die Lenksäule 50 ist in Figur 5 und Figur 6 dargestellt. Die Vorrichtung weist einen Antrieb 30 auf, der ein Steuerglied 31, ein Schneckenrad 42 sowie einen nicht dargestellten elektrischen Motor umfasst. Das genannte Getriebe 30 steht somit mit der Sperreinheit 10 in mechanischer Wirkverbindung, wobei in Figur 1 und Figur 2 die Sperreinheit 10 sich in einer Entriegelungsstellung 2 befindet. Über den Antrieb 30 ist die Sperreinheit 10 aus der Entriegelungsstellung 2 in eine Verriegelungsstellung 1, die in Figur 3 und Figur 4 dargestellt ist, und umgekehrt bewegbar.

Die Sperreinheit 10 weist ein Sperrgehäuse 12 und ein innerhalb des Sperrgehäuses 12 federbelastetes, linear beweglich gelagertes Sperrglied 13 auf. In der Verriegelungsstellung 1 ragt das Sperrglied 13 mit seinem freien Ende in eine Nut 51 der Lenksäule 50 ein. Hierdurch wird die Lenksäule 50 gesperrt. Im Gegensatz dazu ist das Sperrglied 13 in der Entriegelungsstellung 2 von der Lenksäule 50 losgelöst.

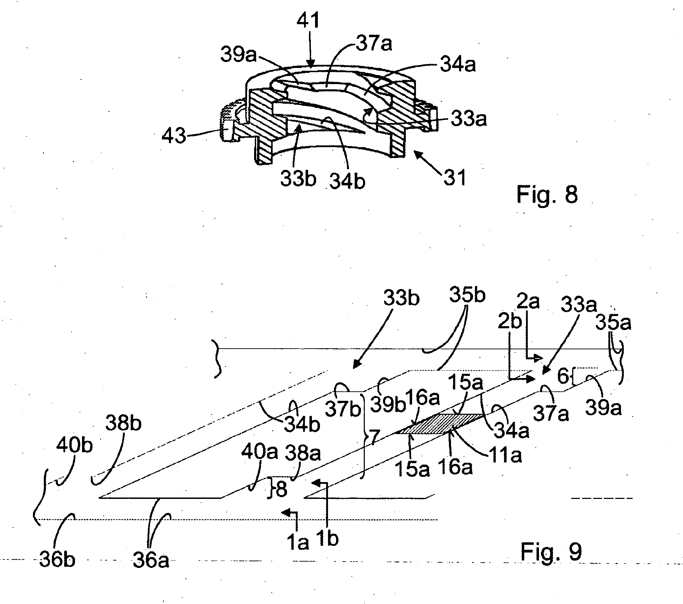

Das Steuerglied 31 wird durch das Schneckenrad 42 angetrieben, wobei das Steuerglied 31 an seinem Randbereich eine Verzahnung 43 aufweist, in die das Schneckenrad 42 eingreift. Die Verzahnung 43 ist in Figur 8 gezeigt. Während des Betriebes wird somit das Steuerglied 31 über das Schneckenrad 42 um eine Drehachse 32 bewegt, wobei in einer ersten Drehrichtung ein Verriegelungsvorgang und in der entgegengesetzten Richtung ein Entriegelungsvorgang bewirkt werden kann.

Das Steuerglied 31 wirkt als eine Art Antriebsrad für die Sperreinheit 10 und ist mit einer beidseitig offenen Bohrung 41 ausgebildet, innerhalb dieser Steuerflächen 33a, 33b verlaufen. Im vorliegenden Ausführungsbeispiel ist das Steuerglied 31 mit einer ersten 33a und einer zweiten Steuerfläche 33b ausgeführt, die unabhängig voneinander innenseitig des Steuergliedes 31 um die Drehachse 32 gewindeartig verlaufen.

Das Sperrgehäuse 12 ist gewindeartig ausgeführt, wobei zwei Flügelelemente 11a, 11b vorsprungartig an der Mantelfläche 12a des Sperrgehäuses 12 angeordnet sind, die während der Bewegung des Steuergliedes 31 flächig die Steuerflächen 33a, 33b kontaktieren. Die Flügelelemente 11a, 11b sowie das Sperrgehäuse 12 bilden ein gemeinsames Bauteil. Jedes Flügelelement 11a, 11b erstreckt sich in einem Winkelbereich von ca. 130° entlang der genannten Mantelfläche 12a, wobei beide Flügelelemente 11a, 11b an zueinander abgewandten Seiten des Sperrgehäuses 12 angeordnet sind. Hierbei ist das erste Flügelelement 11a der ersten Steuerfläche 33a und das zweite Flügelelement 11b der zweiten Steuerfläche 33b zugeordnet. Das bedeutet, dass während der Bewegung des Steuergliedes 31 das erste Flügelelement 11a innerhalb der ersten Steuerfläche 33a und das zweite Flügelelement 11b innerhalb der zweiten Steuerfläche 33b entlang fährt. Hierbei weisen die Steuerflächen 33a, 33b eine derartige Steuerkontur auf, dass eine zuverlässige Kraftübertragung vom Steuerglied 31 auf die Sperreinheit 10 erfolgt, sodass das Sperrglied 13 in seine jeweilige Stellung 1, 2 überführt werden kann.

Wie besonders aus der Figur 8 und Figur 9 zu erkennen ist, weist die Steuerfläche 33a, 33b vier ebene Flächen auf. Diese ebenen Flächen setzen sich aus einer oberen Endfläche 35a, 35b, einer oberen Zwischenfläche 37a, 37b, einer unteren Zwischenfläche 38a, 38b und einer unteren Endfläche 36a, 36b zusammen. Des Weiteren weist jede Steuerfläche 33a, 33b drei Schrägflächen auf mit einer oberen Schrägfläche 39a, 39b, einer Hauptschrägfläche 34a, 34b und einer unteren Schrägfläche 40a, 40b. Die untere Schrägfläche 40a, 40b liegt hierbei zwischen der unteren Endfläche 36a, 36b und der unteren Zwischenfläche 38a, 38b. Die Hauptschrägfläche 34a, 34b befindet sich zwischen der unteren Zwischenfläche 38a, 38b und der oberen Zwischenfläche 37a, 37b. Die obere Schrägfläche 39a, 39b liegt zwischen der oberen Endfläche 35a, 35b und der oberen Zwischenfläche 37a, 37b. Die vier ebenen Flächen in jeder Steuerfläche 33a, 33b bilden unterschiedliche ebene Plateaus, die in einer zur Drehachse 32 des Steuergliedes 31 senkrechten Ebene liegen.

Ausgehend von der Entriegelungsstellung 2 gemäß Figur 1 und Figur 2 erfolgt der Verriegelungsvorgang in der Art, dass zunächst der Antrieb 30 über einen nicht dargestellten elektrischen Motor das Schneckenrad 42 sowie das Steuerglied 31 antreibt, das sich um die Achse 32 in eine definierte Richtung dreht. Die Sperreinheit 10 befindet sich hierbei axial verschiebbar innerhalb der Bohrung 41 des Steuergliedes 31 und wird durch die Steuerflächen 33a, 33b axial entlang der Achse 32 in Richtung der Lenksäule 50 linear verschoben. Die Steuerflächen 33a, 33b sind nutförmig im Innern des Steuergliedes 31 ausgeführt, wobei die Flügelelemente 11a, 11b mit ihrem Außenbereich in die jeweilige Steuerfläche 33a, 33b eingreifen. Während das Steuerglied 31 um die Achse 32 rotiert, erfährt das Sperrgehäuse 12 sowie das Sperrglied 13 lediglich eine translatorische Bewegung entlang der Drehachse 32, ohne sich mit dem Steuerglied 31 zu drehen.

Die Flügelelemente 11a, 11 b ragen nahezu vollständig in die nutförmige Steuerfläche 33a, 33b ein und werden dort während der Bewegung des Steuergliedes 31 entsprechend geführt. Im vorliegenden Ausführungsbeispiel weist das Flügelelement 11a, 11b im Querschnitt eine rautenförmige Gestalt auf, welches in Figur 9 angedeutet ist. Jedes Flügelelement 11a, 11b ist entsprechend der Kontur der Steuerflächen 33a, 33b angepasst, dass bedeutet, dass das Flügelelement 11a, 11b zwei ebene Flächen 15a, 15b und zwei schräge Flächen 16a, 16b aufweist. Die Steigung der Schrägflächen 16a, 16b entspricht der Steigung der Hauptschrägfläche 34a, 34b sowie der oberen und der unteren Schrägfläche 38a, 38b, 39a, 39b.

In der Entriegelungsstellung 2 gemäß Fig. 1 und Fig. 2 liegt jedes Flügelelement 11a, 11b auf der oberen Endfläche 35a, 35b der Steuerfläche 33a, 33b auf. Während des Verriegelungsvorganges verfährt das Flügelelement 11a, 11b von der oberen Endfläche 35a, 35b zunächst auf die obere Schrägfläche 39a, 39b bis es zur oberen Zwischenfläche 37a, 37b gelangt. Während dieser Bewegung erfolgte ein erster Hubweg 6, welches in Figur 9 angedeutet ist.

Während das Flügelelement 11a, 11b an der oberen Endfläche 35a, 35b, an der oberen Zwischenfläche 37a, 37b oder an der oberen Schrägfläche 39a, 39b sich befindet, befindet sich die Sperreinheit 10 in der Entriegelungsstellung 2. Das Besondere bei dieser Ausführungsform ist, dass eine erste 2a und eine zweite Entriegelungsstellung 2b vorliegen kann, wobei die erste Entriegelungsstellung 2a dann vorliegt, wenn das Flügelelement 11a, 11b die obere Endfläche 35a, 35b kontaktiert. Die zweite Entriegelungsstellung 2b liegt dann vor, wenn das Flügelelement 11a, 11b die obere Zwischenfläche 37a, 37b kontaktiert.

Ausgehend von der zweiten Entriegelungsstellung 2b folgt der Verriegelungsvorgang derart, dass bei einer weiteren Rotation des Steuergliedes 31 um die Drehachse 32 das Flügelelement 11a, 11b die obere Zwischenfläche 37a, 37b verlässt und in die Hauptschrägfläche 34a, 34b gelangt. Während der Rotation des Steuergliedes 31 verfährt das Flügelelement 11a, 11b entlang der gesamten Hauptschrägfläche 34a, 34b bis es zur unteren Zwischenfläche 38a, 38b gelangt. Nachdem das Flügelelement 11a, 11b die untere Zwischenfläche 38a, 38b erreicht hat, hat das Sperrgehäuse 12 einen zweiten Hubweg 7 durchlaufen, wobei die Sperreinheit 10 mit dem Sperrglied 13 die Verriegelungsstellung 1 gemäß Figur 3 und Figur 4 erreicht hat.

Analog zu der Entriegelungsstellung 2 kann die Sperreinheit 10 ebenfalls in eine erste 1a und eine zweite Verriegelungsstellung 1 b überführt werden. Wenn das Steuerglied 31 sich noch weiter um die Achse 32 dreht, verlässt das Flügelelement 11a, 11b die untere Zwischenfläche 38a, 38b und läuft entlang der unteren Schrägfläche 40a, 40b bis zur unteren Endfläche 36a, 36b, wobei das Sperrgehäuse 12 einen dritten Hubweg 8 durchläuft. Liegt das Flügelelement 11a, 11b auf der unteren Endfläche 36a, 36b auf, befindet sich die Sperreinheit 10 in einer ersten Verriegelungsstellung 1 a. Die zweite Verriegelungsstellung 1b liegt bereits dann vor, wenn das Flügelelement 11a, 11b die untere Zwischenfläche 38a, 38b erreicht hat.

Durch die Bereitstellung einer ersten 1 a und einer zweiten Verriegelungsstellung 1 b sowie einer ersten 2a und einer zweiten Entriegelungsstellung 2b kann gezielt ein Freilauf des Antriebes 30 sowohl in der Verriegelungsstellung 1 als auch in der Entriegelungsstellung 2 erzielt werden. Wenn der Antrieb 30, insbesondere der elektrische Motor für eine gewisse Zeit noch aktiv ist, obwohl die jeweilige Stellung 1, 2 bereits erreicht ist, führt die Sperreinheit 10 insbesondere das Sperrgehäuse 12 eine entlang der Drehachse 32 abwechselnde Hin- und Herbewegung in linearer Richtung aus, ohne die jeweilige Verriegelungsstellung 1 oder die Entriegelungsstellung 2 zu verlassen. Wenn also die erste Verriegelungsstellung 1a erreicht ist und sich dennoch das Steuerglied 31 weiter um die Drehachse 32 drehen sollte, verfährt das Flügelelement 11a, 11b zunächst an der unteren Endfläche 36a, 36b bis es in die benachbarte Steuerfläche 33a, 33b gelangt und dort auf die untere Zwischenfläche 38a, 38b trifft, ohne dass die Gefahr besteht, dass das Flügelelement 11a, 11b in die Hauptschrägfläche 34a, 34b gelangt.

Auch in der Entriegelungsstellung 1 kann das Steuerglied 31 sich noch weiter bewegen, wobei das Flügelelement 11a, 11b sich zunächst auf der oberen Endfläche 35a, 35b-befindet. Anschließend verlässt die Sperreinheit 10 die erste Entriegelungsstellung 2a und verfährt einen ersten Hubweg 6 bis das Flügelelement 11a, 11 b die obere Zwischenfläche 38a, 38b erreicht. Bei einer weiteren Bewegung des Steuergliedes 31 verfährt das Flügelelement 11a, 11b entlang der oberen Schrägfläche 39a, 39b und erreicht wiederum die erste Entriegelungsstellung 2a.

Es kann nun der Fall eintreten, dass die Lenksäule 50 eine Fehlstellung einnimmt, bei der beispielsweise der Zahn 52 sich im Bereich der Gehäuseöffnung 4a befindet, sodass eine Verriegelungsstellung 1 des Sperrgliedes 11 nicht bewirkt werden kann (siehe Figur 5 und Figur 6). In diesem Fall ist die Vorrichtung derart ausgeführt, dass das Sperrglied 13 eine Zwischenstellung 9 einnimmt, die zwischen der Verriegelungsstellung 1 und des Entriegelungsstellung 2 liegt. Das Sperrgehäuse 12 wird zwar über das Steuerglied 31 linear in Richtung Lenksäule 50 bewegt, um etwaige Materialzerstörungen bei einer Fehlstellung der Lenksäule 50 zu vermeiden. Innerhalb des Sperrgehäuses 12 ist eine Feder 14 angeordnet, die auf das Sperrgehäuse 12 und auf das Sperrglied 13 wirkt. Befindet sich nun das Sperrglied 13 in der so genannten Zwischenstellung 9, wirkt die Feder 14 mit einer erhöhten Kraft auf den Kopfbereich des Sperrgliedes 13. Falls beispielsweise der Benutzer des Kraftfahrzeuges manuell eine entsprechende Bewegung der Lenksäule 50 zur Aufhebung der Fehlstellung ausführt, bewirkt die Kraft der Feder 14, dass das Sperrglied 13 sich automatisch in die Nut 51 der Lenksäule 50 verschiebt und somit die gewünschte Verriegelungsstellung 1 einnimmt. Die erfindungsgemäße Vorrichtung ist hierbei so dimensioniert, dass bei einer Fehlstellung der Lenksäule 50 die Flügelelemente 11a, 11b die untere Zwischenfläche 38a, 38b oder die untere Schrägfläche 40a, 40b oder die untere Endfläche 36a, 36b erreichen können.

Im Falle der Fehlstellung der Lenksäule 50 bewegt sich zwar das Sperrgehäuse 12 angetrieben durch die Steuerfläche 33a, 33b translatorisch entlang der Drehachse 32, wobei gleichzeitig das Sperrglied 13, das sich größtenteils innerhalb des Sperrgehäuses 12 befindet, unbeweglich auf dem Zahn 52 der Lenksäule 50 verbleibt. Damit das Sperrgehäuse 12 den oben bereits beschriebenen zweiten und den dritten Hubweg 7, 8 ausführen kann, ist das Sperrgehäuse 12 mit zwei Langlöchern 17 ausgeführt, durch die ein Querstift 18 ragt, der fest mit dem Sperrglied 13 verbunden ist.

Die dargestellte Vorrichtung kann durch eine Steuerelektronik überwacht werden, die beispielsweise fahrzeugseitig angeordnet sein kann. Aus sicherheitstechnischen Gründen kann es vorteilhaft sein, neben der Erfassung des Drehweges oder Drehwinkels des Steuergliedes 31 auch bestimmte Positionen der Sperreinheit 10, insbesondere des Sperrgehäuses 12 oder des Sperrgliedes 13 zu erfassen. Dieses kann beispielsweise über eine Kontrolleinheit 20, die in den Figuren explizit dargestellt ist, erfolgen, die die jeweilige Stellung 1, 2 der Sperreinheit 10 ermittelt. Die Kontrolleinheit 20 weist zwei Sensorelemente 21 auf, die an einem feststehenden Bauteil 3 des Gehäuses 4 angeordnet sind. Das Sensorelement 21 ist hierbei ein Magnetfeldsensor, der das magnetische Feld eines am Sperrgehäuse 12 angeordneten Permanentmagneten 22 erfassen kann. Im dargestellten Ausführungsbeispiel ist das Sperrgehäuse 12 mit einer vorsprungartigen Aufnahme 19 an der Mantelfläche 12a ausgeführt. Innerhalb der Aufnahme 19 ist der Permanentmagnet 22 eingesetzt. Somit kann die Kontrolleinheit 20 die Verriegelungsstellung 1 und die Entriegelungsstellung 2 detektieren.

Die Ermittlung der Position der Sperreinheit 10 kann selbstverständlich alternativ durch weitere Sensorelemente erfolgen, die beispielsweise über eine definierte Änderung der elektrischen Eigenschaft, insbesondere der Induktivität des Widerstandes oder der Kapazität die jeweilige Stellung der Sperreinheit 10 feststellen können.

Wie insbesondere aus den Figuren 1 bis 4 zu erkennen ist, wird das Gehäuse 4 durch einen Deckel 4b gebildet, der den Antrieb 30 mit Sperreinheit 10 und Steuerglied 31 zuverlässig verschließt. Der Deckel 4b weist einen Anschlag 4c auf, der sich vorsprungartig in Richtung der Lenksäule 5 erstreckt. Innerhalb der Sperreinheit 10 ist ein Kontaktelement 23 vorgesehen, das in seinem unteren Bereich zuverlässig durch die Feder 14 umfasst ist. In der Entriegelungsstellung 2 ragt der Anschlag 4c durch eine Öffnung 24 der Sperreinheit 10 und berührt das Kontaktelement 23. Der Querstift 18 kontaktiert im unteren Bereich des Langloches 17 das Sperrgehäuse 12, wobei das Kontaktelement 23 dafür sorgt, dass die Feder 14 über den Querstift 18 gespannt ist und damit eine zuverlässige Verriegelung erfolgen kann. In dieser Stellung übt die Feder 14 eine entsprechende Kraft auf das Sperrgehäuse 12 in Richtung der Lenksäule 50 aus, so dass eine zuverlässige Verriegelung auslösbar ist. Hierdurch wird bezweckt, dass das Flügelelement 11 a, 11 b während des Verriegelungsvorganges die obere Endfläche 35a, 35b in Richtung der oberen Zwischenfläche 37a, 37b verlässt, wodurch das Sperrgehäuse 12 die Hubbewegung 6 ausführt. Alternativ oder zusätzlich kann eine nicht dargestellte Tellerfeder innenseitig am Deckel 4b vorgesehen sein, die unmittelbar auf das Sperrgehäuse 12 mit einer Kraft in Richtung der Lenksäule 50 drückt. Auch hierdurch wird erreicht, dass die Sperreinheit 10 zuverlässig die Entriegelungsstellung 2 in Richtung der Verriegelungsstellung 1 verlassen kann.

Aufgrund der großflächigen Flügelelemente 11a, 11b können hohe Kräfte auf das Sperrglied 12 übertragen werden, die bis zu 200 N betragen können. Der Einsatz des elektrischen Motors in Kombination mit dem Schneckenrad 42 begünstigt, hohe Drehmomente auf das Steuerglied 31 übertragen zu können. Ein weiter Vorteil ist, dass durch das Schneckenrad 42 der Antrieb 30 selbsthemmend ausgeführt ist.

Die in Figur 9 dargestellten oberen Zwischenflächen 37a,37b dienen als Sicherheitsplateaus, für den Fall, wenn in einer Notfallsituation, insbesondere bei einer Unterbrechung der elektrischen Versorgung (Batterie entladen etc.) das Flügelelement 11 auf der oberen Schrägfläche 39a,39b stehen bleibt. Das Flügelelement 11 kann zwar wieder in Richtung der Verriegelungsstellung 1 - beispielsweise durch auftretende Vibrationen - "wandern". Jedoch verbleibt die Sperreinheit 10 in der zweiten Entriegelungsstellung 2b, falls das Flügelelement 11 die obere Zwischenfläche 37a,37b erreicht hat.

### Bezugszeichenliste

- 1: Verriegelungsstellung
- 1 a: erste Verriegelungsstellung
- 1 b: zweite Verriegelungsstellung
- 2: Entriegelungsstellung
- 2a: erste Entriegelungsstellung
- 2b: zweite Entriegelungsstellung
- 3: feststehendes Bauteil
- 4: Gehäuse
- 4a: Gehäuseöffnung
- 4b: Deckel
- 4c: Anschlag
- 6: erster Hubweg
- 7: zweiter Hubweg
- 8: dritter Hubweg

- 10: Sperreinheit
- 11: Flügelelement
- 11a: erstes Flügelelement
- 11 b: zweites Flügelelement
- 12: Sperrgehäuse
- 12a: Mantelfläche
- 13: Sperrglied
- 14: Feder
- 15a,b: ebene Fläche
- 16a,b: schräge Fläche
- 17: Langloch
- 18: Querstift
- 19: Aufnahme
- 20: Kontrolleinheit
- 21: Sensorelement
- 22: Permanentmagnet
- 23: Kontaktelement
- 24: Öffnung

- 30: Antrieb
- 31: Steuerglied
- 32: Drehachse
- 33: Steuerfläche
- 33a,b: Steuerfläche
- 34a,b: Schrägfläche
- 35a,b: obere Endfläche
- 36a,b: untere Endfläche
- 37a,b: obere Zwischenfläche
- 38a,b: untere Zwischenfläche
- 39a,b: obere Schrägfläche
- 40a,b: untere Schrägfläche
- 41: Bohrung
- 42: Schneckenrad
- 43: Verzahnung

- 50: Lenksäule
- 51: Nut
- 52: Zahn

## Patentansprüche

1. Vorrichtung zur Ansteuerung einer linear verschiebbaren Sperreinheit (10) eines funktionswesentlichen Bauteils (50), insbesondere einer Lenksäule (50) oder eines Gangschalthebels eines Kraftfahrzeuges, mit
einem mittels eines Antriebes (30) um eine Drehachse (32) hin- und herdrehbaren Steuerglied (31), das innenseitig eine Steuerfläche (33a,33b) aufweist, wobei entlang dieser Steuerfläche (33a,33b) die Sperreinheit (10) in eine Verriegelungsstellung (1) und in eine Entriegelungsstellung (2) führbar ist, wobei in der Verriegelungsstellung (1) die Sperreinheit (10) in das funktionswesentliche Bauteil (50) eingreift und
in der Entriegelungsstellung (2) die Sperreinheit (10) losgelöst vom funktionswesentlichen Bauteil (50) ist, wobei
ein vorsprungartiges, umfangseitig starr an der Sperreinheit (10) angeordnetes Flügelelement (11a,11b) vorgesehen ist, **dadurch gekennzeichnet, dass** Flügeelement während der Bewegung des Steuergliedes (31) flächig die Steuerfläche (33a,33b) kontaktiert.

2. Vorrichtung nach Anspruch 1,
**dadurch gekennzeichnet,**
**dass** zumindest zwei Steuerflächen (33a,33b) und zwei Flügelelemente (11a,11b) vorgesehen sind, wobei ein erstes Flügelelement (11a) einer ersten Steuerfläche (33a) und ein zweites Flügelelement (11b) einer zweiten Steuerfläche (33b) zugeordnet ist.

3. Vorrichtung nach Anspruch 1 oder 2,
**dadurch gekennzeichnet,**
**dass** die Steuerfläche (33a,33b) gewindeartig zur Drehachse (32) des Steuergliedes (31) verläuft, wobei die Steuerfläche (33a,33b) mindestens eine Schrägfläche (34a,34b) mit einer definierten Steigung und mindestens zwei ebene Flächen (35a,35b,36a,36b) aufweist, die in einer zur Drehachse (32) des Steuergliedes (31) senkrechten Ebene liegen.

4. Vorrichtung nach einem der vorhergehenden Ansprüche,
**dadurch gekennzeichnet,**
**dass** die Sperreinheit (10) ein Sperrgehäuse (12) und ein innerhalb des Sperrgehäuses (12) federbelastetes, linear beweglich gelagertes Sperrglied (13) aufweist, insbesondere dass das Flügelelement (11a, 11b) und das Sperrgehäuse (12) ein gemeinsames Bauteil bilden.

5. Vorrichtung nach einem der vorhergehenden Ansprüche,
**dadurch gekennzeichnet,**
**dass** die Steuerfläche (33a,33b) vier ebene Flächen mit einer oberen Endfläche (35a,35b), oberen Zwischenfläche (37a,37b), einer unteren Zwischenfläche (38a,38b) und einer unteren Endfläche (36a,36b)
und
drei Schrägflächen mit
einer oberen Schrägfläche (39a,39b), einer Hauptschrägfläche (34a,34b) und einer unteren Schrägfläche (40a,40b) aufweist,
wobei
die untere Schrägfläche (40a,40b) zwischen der unteren Endfläche (36a,36b) und der unteren Zwischenfläche (38a,38b) liegt,
die Hauptschrägfläche (34a,34b) zwischen der unteren Zwischenfläche (38a,38b) und der oberen Zwischenfläche (37a,37b) liegt und
die obere Schrägfläche (39a,39b) zwischen der oberen Endfläche (35a,35b) und der oberen Zwischenfläche (37a,37b) liegt.

6. Vorrichtung nach einem der vorhergehenden Ansprüche,
**dadurch gekennzeichnet,**
**dass** die Verriegelungsstellung (1) eine erste (1a) und in eine zweite Verriegelungsstellung (1 b) und die Entriegelungsstellung (2) eine erste (2a) und eine zweite Entriegelungsstellung (2b) umfasst, wodurch ein Freilauf des Antriebs in der Verriegelungsstellung (1) und in der Entriegelungsstellung (2) erzielbar ist, insbesondere dass der Freilauf ein unendlicher Freilauf ist.

7. Vorrichtung nach Anspruch 6,
**dadurch gekennzeichnet,**
**dass** während des Freilaufes die Sperreinheit (10) eine entlang der Drehachse (32) abwechselnde Hin- und Herbewegung in linearer Richtung ausführt, ohne die jeweilige Verriegelungsstellung (1) oder die Entriegelungsstellung (2) zu verlassen.

8. Vorrichtung nach einem der vorhergehenden Ansprüche,
**dadurch gekennzeichnet,**
**dass** die Steuerfläche (33a,33b) derart ausgebildet ist, dass in der ersten Verriegelungsstellung (1a) der Sperreinheit (10) das Flügelelement (11a,11b) die untere Endfläche (36a,36b) kontaktiert,
in der zweiten Verriegelungsstellung (1b) der Sperreinheit (10) das Flügelelement (11a,11b) die untere Zwischenfläche (38a,38b) kontaktiert,
in der ersten Entriegelungsstellung (2a) der Sperreinheit (10) das Flügelelement (11a,11b) die obere Endfläche (35a,35b) kontaktiert und
in der zweiten Entriegelungsstellung (2b) der Sperreinheit (10) das Flügelelement (11a, 11b) die obere Zwischenfläche (37a, 37b) kontaktiert.

9. Vorrichtung nach einem der vorhergehenden Ansprüche,
**dadurch gekennzeichnet,**
**dass** über eine Kontrolleinheit (20) die jeweilige Stellung (1,2) der Sperreinheit (10) ermittelbar ist, insbesondere dass die Kontrolleinheit (20) ein Sensorelement (21) aufweist, das insbesondere über eine definierte Änderung seiner elektrischen Eigenschaft, insbesondere der Induktivität, des Widerstandes oder der Kapazität ein Sensorsignal erzeugt, aus dem die jeweilige Stellung der Sperreinheit (10) feststellbar ist und/oder dass das Sensorelement (21) ein Magnetfeldsensor, ein Drucksensor oder ein optischer Sensor ist.

10. Vorrichtung nach Anspruch 9,
**dadurch gekennzeichnet,**
**dass** das Sensorelement (21) an der Steuerfläche (33a,33b) oder an dem Flügelelement (11a, 11b) angeordnet ist.

11. Vorrichtung nach Anspruch 9 oder 10,
**dadurch gekennzeichnet,**
**dass** das Sensorelement (21) an einem feststehenden Bauteil (3), das benachbart zur Sperreinheit (10) positioniert ist, angeordnet ist.

12. Vorrichtung nach einem der vorhergehenden Ansprüche,
**dadurch gekennzeichnet,**
**dass** das Sensorelement (21) an der oberen (37a,37b) und/oder an der unteren Zwischenfläche (38a,38b) der Steuerfläche (33a,33b) angeordnet ist.

13. Vorrichtung nach einem der vorhergehenden Ansprüche,
**dadurch gekennzeichnet,**
**dass** das Steuerglied (31) als Antriebsrad wirkt und mit einer Bohrung (41) ausgebildet ist, in der die Steuerflächen (33a,33b) verlaufen, wobei innerhalb der Bohrung (41) die Sperreinheit (10) axial verschieblich gelagert ist.

14. Vorrichtung nach einem der vorhergehenden Ansprüche,
**dadurch gekennzeichnet,**
**dass** das Sperrgehäuse (12) eine zylinderartige Form aufweist, wobei das Flügelelement (11a, 11b) in einem Bereich zwischen 60° ≤ x ≤ 180°, vorzugsweise in einem Bereich zwischen 90° ≤ x ≤ 150° entlang der Mantelfläche (12a) des Sperrgehäuses (12) sich erstreckt.

15. Vorrichtung nach einem der vorhergehenden Ansprüche,
**dadurch gekennzeichnet,**
**dass** das Sperrgehäuse (12) zylinderartig ausgeführt ist, innerhalb dessen eine Feder (14) angeordnet ist, die auf das Sperrgehäuse (12) und auf das Sperrglied (13) wirkt, wobei die Feder (14) in der Verriegelungsstellung (1) eine definierte Kraft in Richtung der Entriegelungsstellung (2) auf das Sperrgehäuse (12) ausübt, insbesondere dass das Steuerglied (31) und die Sperreinheit (10) innerhalb eines Gehäuses (4) bewegbar gelagert sind und/oder insbesondere in der Entriegelungsstellung (2) die Feder (14) eine definierte Kraft in Richtung der Verriegelungsstellung (1) auf die Sperreinheit (10) ausübt.

16. Vorrichtung nach einem der vorhergehenden Ansprüche,
**dadurch gekennzeichnet,**
**dass** das Steuerglied (31) und die Sperreinheit (10) innerhalb eines Gehäuses (4) bewegbar gelagert sind, wobei insbesondere ein Federelement am Gehäuse (4) angeordnet ist, das in der Entriegelungsstellung (2) eine definierte Kraft in Richtung der Verriegelungsstellung (1) auf die Sperreinheit (10) ausübt.

## Claims

1. An apparatus for actuating a locking unit (10) - displaceable in a linear manner - of a functionally essential component (50), in particular of a steering column (50) or a gearshift lever of a motor vehicle, with
a control member (31) which is rotatable in a reciprocating manner about an axis of rotation (32) by means of a drive (30) and which has a control face (33a, 33b) on the inside, wherein the locking unit (10) is capable of being moved along this control face (33a, 33b) into a locking position (1) and into an unlocking position (2), wherein in the locking position (1) the locking unit (10) engages in the functionally essential component (50) and
in the unlocking position (2) the locking unit (10) is released from the functionally essential component (50),
wherein a wing element (11a, 11b) in the manner of a projection arranged rigidly on the locking unit (10) on the periphery is provided,
**characterized in that** during the movement of the control member (31) the wing element (IIa, IIb) contacts the control face (33a, 33b) in a planar manner.

2. An apparatus according to Claim 1, **characterized in that** at least two control faces (33a, 33b) and two wing elements (11 a, 11 b) are provided, wherein a first wing element (11a) is associated with a first control face (33a) and a second wing element (11 b) is associated with a second control face (33b).

3. An apparatus according to Claim 1 or 2, **characterized in that** the control face (33a, 33b) extends in the manner of a helix with respect to the axis of rotation (32) of the control member (31), wherein the control face (33a, 33b) has at least one sloping face (34a, 34b) with a defined inclination and at least two flat faces (35a, 35b, 36a, 36b) which are situated in a plane at a right angle to the axis of rotation (32) of the control member (31).

4. An apparatus according to any of the preceding Claims, **characterized in that** the locking unit (10) has a locking housing (12) and a locking member (13) springloaded inside the locking housing (12) and mounted so as to be movable in a linear manner, and in particular the wing element (11 a, 11 b) and the locking housing (12) form a common component.

5. An apparatus according to any of the preceding Claims, **characterized in that** the control face (33a, 33b) has four flat faces with
an upper end face (35a, 35b), [an] upper intermediate face (37a, 37b), a lower intermediate face (38a, 38b) and a lower end face (36a, 36b),
and
three sloping faces with an upper sloping face (39a, 39b), a main sloping face (34a, 34b) and a lower sloping face (40a, 40b),
wherein
the lower sloping face (40a, 40b) is situated between the lower end face (36a, 36b) and the lower intermediate face (38a, 38b),
the main sloping face (34a, 34b) is situated between the lower intermediate face (38a, 38b) and the upper intermediate face (37a, 37b), and
the upper sloping face (39a, 39b) is situated between the upper end face (35a, 35b) and the upper intermediate face (37a, 37b).

6. An apparatus according to any one of the preceding Claims, **characterized in that** the locking position (1) has a first locking position (1 a) and a second locking position (1b), and the unlocking position (2) has a first unlocking position (2a) and a second unlocking position (2b), as a result of which a freewheeling of the drive is capable of being achieved in the locking position (1) and in the unlocking position (2), and in particular the freewheeling is an endless freewheeling.

7. An apparatus according to Claim 6, **characterized in that** during the freewheeling the locking unit (10) performs a reciprocating movement alternating along the axis of rotation (32) in a linear direction, without leaving the respective locking position (1) or the unlocking position (2).

8. An apparatus according to any one of the preceding Claims, **characterized in that** the control face (33a, 33b) is designed in such a way that
in the first locking position (1 a) of the locking unit (10) the wing element (11 a, 11 b) contacts the lower end face (36a, 36b),
in the second locking position (1b) of the locking unit (10) the wing element (11a, 11 b) contacts the lower intermediate face (38a, 38b),
in the first unlocking position (2a) of the locking unit (10) the wing element (11a, 11 b) contacts the upper end face (35a, 35b) and
in the second unlocking position (2b) of the locking unit (10) the wing element (11a, 11 b) contacts the upper intermediate face (37a, 37b).

9. An apparatus according to any one of the preceding Claims, **characterized in that** the respective position (1, 2) of the locking unit (10) is capable of being determined by way of a control unit (20), and in particular the control unit (20) has a sensor element (21) which in particular - by way of a defined change in its electrical property, in particular the inductivity, the resistance or the capacity - produces a sensor signal from which the respective position of the locking unit (10) is capable of being established and/or the sensor element (21) is a magnetic field sensor, a pressure sensor or an optical sensor.

10. An apparatus according to Claim 9, **characterized in that** the sensor element (21) is arranged on the control face (33a, 33b) or on the wing element (11 a, 11 b).

11. An apparatus according to Claim 9 or 10, **characterized in that** the sensor element (21) is arranged on a fixed component (3) which is positioned adjacent to the locking unit (10).

12. An apparatus according to any one of the preceding Claims, **characterized in that** the sensor element (21) is arranged on the upper intermediate face (37a, 37b) and/or on the lower intermediate face (38a, 38b) of the control face (33a, 33b).

13. An apparatus according to any one of the preceding Claims, **characterized in that** the control member (31) acts as a drive wheel and is designed with a bore (41) in which the control faces (33a, 33b) extend, wherein the locking unit (10) is mounted so as to be displaceable in an axial manner inside the bore (41).

14. An apparatus according to any one of the preceding Claims, **characterized in that** the locking housing (12) has a cylindrical shape, wherein the wing element (11 a, 11 b) extends in a range of between 60° ≤ × ≤ 180°, preferably in a range of between 900 ≤ × ≤ 150°, along the external face (21 a) of the locking housing (12).

15. An apparatus according to any one of the preceding Claims, **characterized in that** the locking housing (12) is made cylindrical, inside which is arranged a spring (14) which acts upon the locking housing (12) and upon the locking member (13), wherein in the locking position (1) the spring (14) exerts a defined force in the direction of the unlocking position (2) upon the locking housing (12), and in particular the control member (31) and the locking unit (10) are mounted so as to be movable inside a housing (4) and/or in particular in the unlocking position (2) the spring (14) exerts a defined force in the direction of the locking position (1) upon the locking unit (10).

16. An apparatus according to any one of the preceding Claims, **characterized in that** the control member (31) and the locking unit (10) are mounted inside a housing (4), wherein in particular a spring element is arranged on the housing (4) which in the unlocking position (2) exerts a defined force in the direction of the locking position (1) upon the locking unit (10).

## Revendications

1. Dispositif pour l'asservissement d'une unité de blocage (10) à translation linéaire d'un élément fonctionnellement essentiel (50), en particulier d'une colonne de direction (50) ou d'un levier de changement de vitesse d'un véhicule automobile, comprenant
un organe de commande (31) rotatif en va-et-vient autour d'un axe de rotation (32) au moyen d'un entraînement (30), organe qui présente sur le côté intérieur une surface de commande (33a, 33b), sachant que l'unité de blocage (10) peut être dirigée le long de cette surface de commande (33a, 33b) dans une position de verrouillage (1) et dans une position de déverrouillage (2), sachant
que dans la position de verrouillage (1), l'unité de blocage (10) s'engage dans l'élément fonctionnellement essentiel (50),
et que dans la position de déverrouillage (2), l'unité de blocage (10) est dégagée de l'élément fonctionnellement essentiel (50),
sachant qu'il est prévu un élément en saillie formant patte (11a, 11b), disposé fixement sur la périphérie de l'unité de blocage (10),
**caractérisé en ce que** l'élément formant patte (IIa, IIb) entre en contact surfacique avec la surface de commande (33a, 33b) pendant le mouvement de l'organe de commande (31).

2. Dispositif selon la revendication 1, **caractérisé en ce qu'**il est prévu au moins deux surfaces de commande (33a, 33b) et deux éléments formant pattes (11a, 11 b), sachant qu'un premier élément formant patte (11a) est associé à une première surface de commande (33a) et qu'un deuxième élément formant patte (11 b) est associé à une deuxième surface de commande (33b).

3. Dispositif selon la revendication 1 ou 2, **caractérisé en ce que** la surface de commande (33a, 33b) s'étend à la manière d'un filetage par rapport à l'axe de rotation (32) de l'organe de commande (31), sachant que la surface de commande (33a, 33b) présente au moins une surface oblique (34a, 34b) ayant une pente définie et au moins deux surfaces planes (35a, 35b, 36a, 36b) qui se trouvent dans un plan perpendiculaire à l'axe de rotation (32) de l'organe de commande (31).

4. Dispositif selon l'une des revendications précédentes, **caractérisé en ce que** l'unité de blocage (10) présente un boîtier de blocage (12) et un organe de blocage (13) monté à déplacement linéaire à l'intérieur du boîtier de blocage (12) en étant sollicité par ressort, en particulier **en ce que** l'élément formant patte (11a, 11b) et le boîtier de blocage (12) forment un même élément structurel.

5. Dispositif selon l'une des revendications précédentes, **caractérisé en ce que** la surface de commande (33a, 33b) présente
quatre surfaces planes avec une surface terminale supérieure (35a, 35b), une surface intermédiaire supérieure (37a, 37b), une surface intermédiaire inférieure (38a, 38b) et une surface terminale inférieure (36a, 36b),
et trois surfaces obliques avec une surface oblique supérieure (39a, 39b), une surface oblique principale (34a, 34b) et une surface oblique inférieure (40a, 40b),
sachant
que la surface oblique inférieure (40a, 40b) se trouve entre la surface terminale inférieure (36a, 36b) et la surface intermédiaire inférieure (38a, 38b), que la surface oblique principale (34a, 34b) se trouve entre la surface intermédiaire inférieure (38a, 38b) et la surface intermédiaire supérieure (37a, 37b),
et que la surface oblique supérieure (39a, 39b) se trouve entre la surface terminale supérieure (35a, 35b) et la surface intermédiaire supérieure (37a, 37b).

6. Dispositif selon l'une des revendications précédentes, **caractérisé en ce que** la position de verrouillage (1) comprend une première position de verrouillage (1a) et une deuxième position de verrouillage (1b) et la position de déverrouillage (2) comprend une première position de déverrouillage (2a) et une deuxième position de déverrouillage (2b), de sorte qu'on peut obtenir une roue libre de l'entraînement dans la position de verrouillage (1) et dans la position de déverrouillage (2), en particulier **en ce que** la roue libre est une roue libre sans fin.

7. Dispositif selon la revendication 6, **caractérisé en ce que**, pendant la roue libre, l'unité de blocage (10) effectue en direction linéaire un mouvement de va-et-vient alternant le long de l'axe de rotation (32), sans quitter la position respective de verrouillage (1) ou la position de déverrouillage (2).

8. Dispositif selon l'une des revendications précédentes, **caractérisé en ce que** la surface de commande (33a, 33b) est configurée de telle sorte que dans la première position de verrouillage (1a) de l'unité de blocage (10), l'élément formant patte (11a, 11b) entre en contact avec la surface terminale inférieure (36a, 36b),
dans la deuxième position de verrouillage (1b) de l'unité de blocage (10), l'élément formant patte (11a, 11b) entre en contact avec la surface intermédiaire inférieure (38a, 38b),
dans la première position de déverrouillage (2a) de l'unité de blocage (10), l'élément formant patte (11 a, 11 b) entre en contact avec la surface terminale supérieure (35a, 35b), et
dans la deuxième position de déverrouillage (2b) de l'unité de blocage (10), l'élément formant patte (11a, 11b) entre en contact avec la surface intermédiaire supérieure (37a, 37b).

9. Dispositif selon l'une des revendications précédentes, **caractérisé en ce qu'**on peut déterminer la position respective (1, 2) de l'unité de blocage (10) au moyen d'une unité de contrôle (20), en particulier **en ce que** l'unité de contrôle (20) présente un élément détecteur (21) qui produit, en particulier au moyen d'une modification définie de sa caractéristique électrique, en particulier de l'inductance, de la résistance ou de la capacitance, un signal de détecteur à partir duquel la position respective de l'unité de blocage (10) peut être identifiée, et/ou **en ce que** l'élément détecteur (21) est un détecteur de champ magnétique, un détecteur de pression ou un détecteur optique.

10. Dispositif selon la revendication 9, **caractérisé en ce que** l'élément détecteur (21) est disposé sur la surface de commande (33a, 33b) ou sur l'élément formant patte (11 a, 11 b).

11. Dispositif selon la revendication 9 ou 10, **caractérisé en ce que** l'élément détecteur (21) est disposé sur un élément structurel fixe (3) qui est positionné au voisinage de l'unité de blocage (10).

12. Dispositif selon l'une des revendications précédentes, **caractérisé en ce que** l'élément détecteur (21) est disposé sur la surface intermédiaire supérieure (37a, 37b) et/ou sur la surface intermédiaire inférieure (38a, 38b) de la surface de commande (33a, 33b).

13. Dispositif selon l'une des revendications précédentes, **caractérisé en ce que** l'organe de commande (31) joue le rôle de roue menante et est réalisé avec un perçage (41) dans lequel s'étendent les surfaces de commande (33a, 33b), sachant que l'unité de blocage (10) est montée à translation axiale à l'intérieur du perçage (41).

14. Dispositif selon l'une des revendications précédentes, **caractérisé en ce que** le boîtier de blocage (12) présente une forme cylindrique, sachant que l'élément formant patte (11a, 11b) s'étend sur une plage de 60° ≤ x ≤ 180°, de préférence dans une plage de 90° ≤ x ≤ 150°, le long de la face d'enveloppe (12a) du boîtier de blocage (12).

15. Dispositif selon l'une des revendications précédentes, **caractérisé en ce que** le boîtier de blocage (12) est réalisé à la manière d'un cylindre à l'intérieur duquel est disposé un ressort (14) qui agit sur le boîtier de blocage (12) et sur l'organe de blocage (13), sachant que le ressort (14) exerce dans la position de verrouillage (1) une force définie sur le boîtier de blocage (12) en direction de la position de déverrouillage (2), en particulier que l'organe de commande (31) et l'unité de blocage (10) sont montés à déplacement à l'intérieur d'un boîtier (4), et/ou sachant en particulier que le ressort (14) exerce dans la position de déverrouillage (2) une force définie sur l'unité de blocage (10) en direction de la position de verrouillage (1).

16. Dispositif selon l'une des revendications précédentes, **caractérisé en ce que** l'organe de commande (31) et l'unité de blocage (10) sont montés à déplacement à l'intérieur d'un boîtier (4), sachant en particulier qu'un élément formant ressort est disposé sur le boîtier (4), élément qui exerce dans la position de déverrouillage (2) une force définie sur l'unité de blocage (10) en direction de la position de verrouillage (1).
